(19) **Europäisches Patentamt European Patent Office Office européen des brevets**

(11) **EP 2 493 986 B1**

(12) **FASCICULE DE BREVET EUROPEEN**

(45) Date de publication et mention de la délivrance du brevet:
**05.12.2018 Bulletin 2018/49**

(21) Numéro de dépôt: **10782403.9**

(22) Date de dépôt: **29.10.2010**

(51) Int Cl.:
***C08L 95/00*** *(2006.01)*

(86) Numéro de dépôt international:
**PCT/IB2010/054914**

(87) Numéro de publication internationale:
**WO 2011/051912 (05.05.2011 Gazette 2011/18)**

(54) **UTILISATION DE CIRES DANS UNE COMPOSITION BITUME/POLYMERE RETICULEE POUR AMELIORER SA RESISTANCE AUX AGRESSIONS CHIMIQUES ET COMPOSITION BITUME/POLYMERE RETICULEE COMPRENANT LESDITES CIRES**

VERWENDUNG VON WACHSEN IN EINER VERNETZTEN BITUMEN/POLYMER-ZUSAMMENSETZUNG ZUR VERBESSERUNG VON DEREN RESISTENZ GEGEN CHEMISCHE ANGRIFFE SOWIE VERNETZTE BITUMEN/POLYMER-ZUSAMMENSETZUNG MIT DIESEN WACHSEN

USE OF WAXES IN A BITUMEN/CROSSLINKED POLYMER COMPOSITION IN ORDER TO IMPROVE THE RESISTANCE THEREOF TO CHEMICAL ATTACK, AND BITUMEN/CROSSLINKED POLYMER COMPOSITION COMPRISING SAID WAXES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2009 FR 0957628**

(43) Date de publication de la demande:
**05.09.2012 Bulletin 2012/36**

(73) Titulaire: **TOTAL MARKETING SERVICES**
**92800 Puteaux (FR)**

(72) Inventeurs:
• **HARDERS, Sylvia**
  **25712 Buchholz (DE)**
• **CHAMINAND, Julien**
  **F-69120 Vaulx En Velin (FR)**

(74) Mandataire: **Hirsch & Associés**
  **137, rue de l'Université**
  **75007 Paris (FR)**

(56) Documents cités:
  **EP-A1- 1 845 134**       **WO-A1-02/16499**
  **WO-A1-2008/101809**    **WO-A2-2009/016281**

• **HWANG ET AL: "Geochemical comparison of reservoir solid bitumens with diverse origins", ORGANIC GEOCHEMISTRY, PERGAMON, AMSTERDAM, NL, vol. 29, no. 1-3, 1 January 1998 (1998-01-01), pages 505-517, XP005812732, ISSN: 0146-6380, DOI: 10.1016/S0146-6380(98)00078-3**

Remarques:
Le dossier contient des informations techniques présentées postérieurement au dépôt de la demande et ne figurant pas dans le présent fascicule.

**Description**

**DOMAINE TECHNIQUE**

La présente invention concerne l'utilisation de cires dans des compositions bitume/polymère réticulées pour améliorer leur résistance aux agressions chimiques. L'invention concerne aussi les compositions bitume/polymère réticulées comprenant lesdites cires. L'invention concerne également le procédé de préparation desdites compositions bitume/polymère réticulées. L'invention concerne enfin les enrobés comprenant lesdites compositions bitume/polymère réticulées et des granulats et leur procédé de préparation.

**ART ANTERIEUR**

Il est connu d'utiliser des compositions bitume/polymère réticulées, comme revêtements de surfaces diverses et, en particulier, comme revêtements routiers, à condition que ces compositions présentent en combinaison un certain nombre de caractéristiques mécaniques.

Pour maintenir et/ou améliorer les caractéristiques et notamment les propriétés mécaniques d'un bitume conventionnel, on utilise depuis longtemps des compositions bitume/polymère réticulées dans lesquelles le bitume (formé d'un ou plusieurs types de bitumes) est mélangé avec un ou plusieurs polymères fonctionnels, notamment des élastomères de styrène et de butadiène, ces élastomères étant réticulées chimiquement in situ, éventuellement à l'aide d'un agent de couplage ou de réticulation, par exemple le soufre ou l'un au moins de ses précurseurs.

Des caractéristiques mécaniques optimisées sont notamment cruciales pour les applications revêtements routiers.

Au-delà des propriétés mécaniques, il convient de tenir compte pour les bitumes, de leur sensibilité à certains agents chimiques. Ces agents chimiques agressifs peuvent être, par exemple des solvants hydrocarbonés, en particulier des solvants pétroliers tels que les kérosènes, les gazoles et/ou les essences ou bien encore des produits, en particulier des fluides, utilisés pour le déverglaçage et/ou le dégivrage et/ou le déneigement des avions et des zones de roulage. Ces fluides sont par exemple des solutions aqueuses salines de potassium, sodium, magnésium et/ou calcium, et/ou des compositions à base d'éthylène glycol et/ou à base de propylène glycol.

L'effet agressif de tels agents chimiques se cumule avec les contraintes de trafic intense, notamment de lourds véhicules, et des intempéries; ce qui a pour effet néfaste d'accroître la dégradation rapide des chaussées, en particulier des chaussées aéronautiques.

Cette sensibilité des bitumes à ces agents chimiques agressifs, aux agressions chimiques est plus spécialement gênante pour les bitumes constituant par exemple les tarmacs et les revêtements de pistes d'aéroport, qui sont réalisés en enrobés bitumineux (conglomérat bitume/granulats). En effet, ces tarmacs et revêtements d'aéroport sont fréquemment souillés par des égouttures de kérosène, lors du remplissage des réservoirs des avions, par des fuites ou autres déversements accidentels de produits pétroliers. En outre, ils sont également exposés aux différents fluides utilisés par temps froids pour éliminer la glace, le givre et/ou la neige sur les avions et sur les pistes.

Les stations services ainsi que les locaux industriels de dépôts d'hydrocarbures peuvent être également sujets à ce même problème de résistance des revêtements bitumineux aux agents chimiques agressifs que sont les solvants hydrocarbonés et/ou les fluides de déverglaçage/dégivrage/déneigement.

Les chaussées routières conventionnelles sont naturellement elles aussi exposées à ce type d'agressions chimiques.

Pour tenter de remédier à cela, il a été proposé d'incorporer divers additifs dans des bitumes. Ainsi le brevet EP1311619 décrit l'utilisation de cires dans des bitumes pour augmenter leur résistance aux hydrocarbures. Les cires sont en particulier des cires synthétiques issues du procédé de synthèse Fischer-Tropsch. Lesdits bitumes peuvent éventuellement contenir des polymères qui ne sont pas réticulés.

La demande de brevet WO2009016281 décrit l'utilisation de cires Fischer-Tropsch de manière générale dans une composition de liant concentrée en polymère. Ladite composition comprend une base pétrolière molle aromatique, éventuellement une base bitumineuse et au moins un polymère de styrène et de butadiène présentant une masse supérieure ou égale à 20% par rapport à la masse de ladite composition.

**RESUME DE L'INVENTION**

La société demanderesse a découvert de manière surprenante que l'utilisation de cires Fischer-Tropsch dans une composition bitume/polymère réticulée permettait d'obtenir une résistance aux hydrocarbures pétroliers choisis parmi les kérosènes et/ou les gazoles. Il est décrit que l'amélioration a aussi été observée pour des produits utilisés pour le déverglaçage et/ou le dégivrage et/ou le déneigement, tels que les solutions salines et/ou les compositions à base d'éthylène glycol et/ou à base de propylène glycol. La combinaison des cires Fischer-Tropsch et du polymère réticulé permet d'améliorer de manière tout à fait surprenante la résistance de la composition bitume/polymère réticulée vis-à-vis des hydrocarbures pétroliers choisis parmi les kérosènes et/ou les gazoles. L'effet des cires Fischer-Tropsch combinées au polymère réticulé est supérieur à la somme des effets obtenus pour des cires Fischer-Tropsch dans un bitume pur et pour une composition bitume/polymère réticulée ne comprenant pas de cires Fischer-Tropsch. La société demanderesse a découvert de manière surprenante un très fort effet de synergie entre les cires Fischer-Tropsch et le polymère réticulé dans l'amélioration de la résistance vis-à-vis des hydrocarbures pétroliers choisis parmi les kérosènes et/ou les gazoles.

**BREVE DESCRIPTION**

L'invention concerne l'utilisation de 2% à 6% en masse de cires Fischer-Tropsch, par rapport à la masse de la composition bitume/polymère réticulée, dans une composition bitume/polymère réticulée comprenant un copolymère réticulé de styrène et de butadiène, pour améliorer la résistance aux hydrocarbures pétroliers choisis parmi les kérosènes et/ou les gazoles de ladite composition bitume/polymère réticulée.

Le copolymère de styrène et de butadiène, possède une teneur en motifs à doubles liaisons 1-2 issus du butadiène, comprise entre 10% et 40%, de préférence entre 15% et 30%, plus préférentiellement entre 18% et 25%, encore plus préférentiellement entre 18% et 23% ou entre 20% et 25%.

Le copolymère de styrène et de butadiène possède une masse moléculaire moyenne Mw comprise entre 10 000 et 500 000 daltons, mesurée par chromatographie GPC avec un étalon polystyrène selon la norme ASTM D3536.

La composition bitume/polymère réticulée présentant une élongation maximale, selon la norme NF EN 13587, supérieure ou égale à 400%, une contrainte à l'élongation maximale, selon la norme NF EN 13587, supérieure ou égale à 0,4 MPa, une énergie conventionnelle à 400%, selon la norme NF EN 13587, supérieure ou égale à 3 J/cm$^2$ et une énergie totale, selon la norme NF EN 13587, supérieure ou égale à 1 J.

De préférence, le copolymère de styrène et de butadiène, est associé à un agent réticulant.

De préférence, l'agent réticulant comprend du soufre en fleur.

De préférence, l'agent réticulant est choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène.

La composition bitume/polymère réticulée comprend de 2% à 8% en masse d'un copolymère de styrène et de butadiène, par rapport à la masse de la composition bitume/polymère réticulée, de préférence de 3% à 6%, encore plus préférentiellement de 4% à 5%.

De préférence, la composition bitume/polymère réticulée comprend de 0,05% à 5% en masse d'agent réticulant, par rapport à la masse de la composition bitume/polymère réticulée, de préférence entre 0,1% et 2%, plus préférentiellement entre 0,2% et 1%, encore plus préférentiellement entre 0,3% et 0,5%.

De préférence, la quantité de cires Fischer-Tropsch dans la composition bitume/polymère réticulée est comprise entre 3% et 6% en masse, par rapport à la masse de la composition bitume/polymère réticulée, de préférence entre 3% et 5%, plus préférentiellement entre 3% et 4%.

De préférence, la résistance aux hydrocarbures pétroliers choisis parmi les kérosènes et/ou les gazoles de la composition bitume/polymère réticulée est améliorée lorsque celle-ci est utilisée en application routière comme couche de surface.

De préférence, la résistance aux hydrocarbures pétroliers choisis parmi les kérosènes et/ou les gazoles de la composition bitume/polymère réticulée est améliorée lorsque celle-ci est en mélange avec des granulats dans un enrobé bitumineux.

L'invention concerne aussi une composition bitume/polymère réticulée, de préférence sans agent réticulant, comprenant :

- au moins un bitume,
- de 2% à 6% en masse de cires Fischer-Tropsch, par rapport à la masse de la composition bitume/polymère réticulée
- et de 2% à 8% en masse par rapport à la masse de la composition bitume/polymère réticulée d'un copolymère de styrène et de butadiène qui possède une teneur en motifs à doubles liaisons 1-2 issus du butadiène, comprise entre 10% et 40%, de préférence entre 15% et 30%, plus préférentiellement entre 18% et 25%, encore plus préférentiellement entre 18% et 23% ou entre 20% et 25%. De préférence, cette composition bitume/polymère réticulée est exempte d'huile d'origine pétrolière, d'huile d'origine végétale et/ou animale. En effet, la présence d'une huile pourrait altérer les propriétés de résistance aux agressions chimiques, et en particulier aux hydrocarbures de la composition bitume/polymère réticulée en ramollissant trop fortement la composition bitume/polymère réticulée.

L'invention concerne aussi une composition bitume/polymère réticulée comprenant :

- au moins un bitume,
- de 2% à 6% en masse de cires Fischer-Tropsch, par rapport à la masse de la composition bitume/polymère réticulée,
- de 2% à 8% en masse par rapport à la masse de la composition bitume/polymère réticulée d'un copolymère de styrène et de butadiène qui possède une teneur en motifs à doubles liaisons 1-2 issus du butadiène, comprise entre 10% et 40% en masse, par rapport à la masse totale des motifs butadiène,
- et au moins un agent réticulant choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène.

Selon l'invention, le copolymère réticulé de styrène et de butadiène possède une masse moléculaire moyenne $M_w$ comprise entre 10 000 et 500 000 daltons, mesurée par chromatographie GPC avec un étalon polystyrène selon la norme ASTM D3536.

Selon l'invention, la composition bitume/polymère réticulée présentant une élongation maximale, selon la norme NF EN 13587, supérieure ou égale à 400%, une contrainte à l'élongation maximale, selon la norme NF EN 13587, supérieure ou égale à 0,4 MPa, une énergie conventionnelle à 400%, selon la norme NF EN 13587, supérieure ou égale à 3 J/cm$^2$ et une énergie totale, selon la norme NF EN 13587, supérieure ou égale à 1 J.

De préférence, la composition bitume/polymère réticulée comprend entre 3% et 7% en masse de copolymèrede styrène et de butadiène, par rapport à la masse de la composition bitume/polymère réticulée, de préférence entre 4% et 5%.

De préférence, la composition bitume/polymère réticulée comprend entre 3% et 6% en masse de cires Fischer-Tropsch, par rapport à la masse de la composition bitume/polymère réticulée, de préférence entre 3% et 5%, plus préférentiellement entre 3% et 4%.

L'invention concerne aussi le procédé de préparation d'une composition bitume/polymère réticulée telle que définie ci-dessus, dans lequel on met d'abord en contact entre 120°C et 220°C, de préférence entre 140°C et 200°C, plus préférentiellement entre 160°C et 180°C, pendant une période de 1 heure à 48 heures, de préférence de 4 heures à 24 heures, plus préférentiellement de 8 heures à 16 heures, au moins un bitume, au moins un copolymère de styrène et de butadiène, qui possède une teneur en motifs à doubles liaisons 1-2 issus du butadiène, comprise entre 10% et 40% en masse, par rapport à la masse totale des motifs butadiène, de préférence entre 15% et 30%, plus préférentiellement entre 18% et 25%, encore plus préférentiellement entre 18% et 23% ou entre 20% et 25% et qui possède une masse moléculaire moyenne $M_w$ comprise entre 10 000 et 500 000 daltons, mesurée par chromatographie GPC avec un étalon polystyrène selon la norme ASTM D3536, éventuellement au moins un agent réticulant, puis on met en contact ledit mélange, entre 120°C et 220°C, de préférence entre 140°C et 200°C, plus préférentiellement entre 160°C et 180°C, pendant une période de 30 minutes à 48 heures, de préférence de 1 heure à 24 heures, plus préférentiellement de 4 heures à 16 heures, avec 2% à 6% en masse de cires Fischer-Tropsch.

L'invention concerne aussi le procédé de préparation d'une composition bitume/polymère réticulée telle que définie ci-dessus, dans lequel on met d'abord en contact entre 120°C et 220°C, de préférence entre 140°C et 200°C, plus préférentiellement entre 160°C et 180°C, pendant une période de 1 heure à 48 heures, de préférence de 4 heures à 24 heures, plus préférentiellement de 8 heures à 16 heures, au moins un bitume, au moins un copolymère de styrène et de butadiène, qui possède une teneur en motifs à doubles liaisons 1-2 issus du butadiène, comprise entre 10% et 40% en masse, par rapport à la masse totale des motifs butadiène et une masse moléculaire moyenne $M_w$ comprise entre 10 000 et 500 000 daltons, mesurée par chromatographie GPC avec un étalon polystyrène selon la norme ASTM D3536, et au moins un agent réticulant choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène, puis on met en contact ledit mélange, entre 120°C et 220°C, de préférence entre 140°C et 200°C, plus préférentiellement entre 160°C et 180°C, pendant une période de 30 minutes à 48 heures, de préférence de 1 heure à 24 heures, plus préférentiellement de 4 heures à 16 heures, avec 2% à 6% en masse de cires Fischer-Tropsch.

L'invention concerne aussi un enrobé bitumineux comprenant une composition bitume/polymère réticulée telle que définie ci-dessus en mélange avec des granulats.

L'invention concerne aussi un procédé de préparation d'un enrobé bitumineux tel que défini ci-dessus dans lequel on mélange les granulats et la composition bitume/polymère réticulée telle que définie ci-dessus entre 120°C et 220°C, de préférence entre 140°C et 200°C, plus préférentiellement entre 160°C et 180°C.

**DESCRIPTION DETAILLEE**

Les cires (ou paraffines) utilisées sont des cires synthétiques issues du procédé de synthèse Fischer-Tropsch. Ces cires Fischer-Tropsch sont généralement préparées en faisant réagir du monoxyde de carbone avec de l'hydrogène, typiquement à des pressions élevées sur un catalyseur métallique.

Les cires Fischer-Tropsch préférées sont les cires Fischer-Tropsch décrites dans la demande WO9911737. Les cires Fischer-Tropsch décrites dans ce document, sont des cires Fischer-Tropsch comprenant un mélange de paraffines. Les cires Fischer-Tropsch comprennent une majorité de n-paraffines, souvent plus de 90%, le reste étant constitué par des iso-paraffines.

La longueur moyenne des chaînes paraffiniques des cires Fischer-Tropsch se situe entre 30 et 115 atomes de carbone, de préférence entre 40 et 100, plus préférentiellement entre 60 et 90.

Les cires Fischer-Tropsch ont un point de fusion (point de congélation) compris entre 65 et 105°C, de préférence entre 68 et 100°C.

Les cires Fischer-Tropsch utilisées dans l'invention peuvent être partiellement oxydées ou entièrement oxydées.

Un exemple préféré de cire Fischer-Tropsch est celle vendue sous le nom de marque Sasobit®, qui possède un point de congélation de 100°C (ASTM D 938), une pénétrabilité à 25°C inférieure à 1 1/10 mm (ASTM D 1321) et une pénétrabilité à 65°C de 7 1/10 mm (ASTM 1321).

Un autre type de cires Fischer-Tropsch qui peuvent être utilisées, sont les cires Fischer-Tropsch décrites dans le brevet EP1951818. Ces cires Fischer-Tropsch comprenant une quantité de paraffines isomérisées un peu plus importante que les cires Fischer-Tropsch classiques. Ces cires Fischer-Tropsch comprenant plus de iso-paraffines sont caractérisées par un point de congélation (ISO 2207) compris entre 85 et 120°C et une valeur PEN à 43°C, exprimée en 0,1 mm, déterminée selon IP 376, supérieure à 5.

La quantité de cires Fischer-Tropsch ajoutée aux compositions bitume/polymère réticulées est essentielle à l'invention.

Ainsi, la quantité de cires Fischer-Tropsch est comprise entre 2% et 6% en masse, par rapport à la masse de la composition bitume/polymère réticulée, de préférence entre 2,5% et 5,5%, plus préférentiellement entre 3% et 5%, encore plus préférentiellement entre 3% et 4%. La société demanderesse s'est aperçue qu'une quantité inférieure à 2% en masse de cires Fischer-Tropsch dans la composition bitume/polymère réticulée ne permettait pas d'améliorer de manière significative la résistance aux agressions chimiques, notamment aux hydrocarbures pétroliers tels que les essences, les kérosènes et/ou les gazoles de la composition bitume/polymère réticulée. De même une quantité supérieure à 6% en masse de cires Fischer-Tropsch dans la composition bitume/polymère réticulée, induit une fragilité au niveau des compositions bitume/polymère réticulées qui deviennent cassantes. Cela se traduit par une dégradation des propriétés de retour élastique, de traction et de comportement à basse température, comme par exemple au niveau du point de Fraass. La société demanderesse s'est aperçue qu'il y a un fort effet de synergie entre les cires Fischer-Tropsch dans les quantités mentionnées ci-dessus et le polymère réticulé, qui permet d'augmenter de manière très significative la résistance aux agressions chimiques, notamment aux hydrocarbures pétroliers tels que les essences, les kérosènes et/ou les gazoles des compositions bitume/polymère réticulées.

La composition bitume/polymère réticulée comprend comme composant majoritaire, du bitume. Le bitume utilisé peut être un bitume issu de différentes origines. Le bitume utilisable selon l'invention peut être choisi parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables. Le bitume peut être un bitume d'origine naphténique ou paraffinique, ou un mélange de ces deux bitumes.

La composition bitume/polymère réticulée comprend aussi au moins un polymère réticulable. Ce polymère est choisi parmi les copolymères à base de motifs diène conjugué et de motifs hydrocarbure monovinyl aromatique, car ces copolymères peuvent être réticulés.

Le diène conjugué est le butadiène.

L'hydrocarbure monovinyl aromatique est le styrène.

Plus particulièrement, le polymère de la composition bitume/polymère réticulée consiste en un ou plusieurs copolymères choisis parmi les copolymères de styrène et de butadiène, linéaires ou étoilés, sous forme de dibloc, tribloc et/ou multibranchés, éventuellement avec ou sans charnière statistique, de préférence avec charnière statistique.

Le polymère est un copolymère dibloc de styrène et de butadiène, en particulier un copolymère dibloc de styrène et de butadiène ayant une charnière statistique.

Le copolymère de styrène et de butadiène, a une masse moléculaire moyenne Mw comprise entre 10 000 et 500 000 daltons, de préférence entre 50 000 et 200 000, plus préférentiellement entre 80 000 et 150 000, encore plus préférentiellement entre 100 000 et 130 000, encore plus préférentiellement entre 110 000 et 120 000. La masse moléculaire du copolymère est mesurée par chromatographie GPC avec un étalon polystyrène selon la norme ASTM D3536.

Le copolymère de styrène et de butadiène, possède avantageusement une teneur pondérale en styrène allant de 5% à 50% en masse, par rapport à la masse de copolymère, de préférence de 20% à 40%.

Le copolymère de styrène et de butadiène, possède avantageusement une teneur pondérale en butadiène allant de 50% à 95% en masse, par rapport à la masse de copolymère, de préférence de 60% à 80%.

Parmi ces motifs butadiène, on distingue les motifs à doubles liaisons 1-4 issus du butadiène et les motifs à doubles liaisons 1-2 issus du butadiène. Par motifs à doubles liaisons 1-4 issus du butadiène on entend les motifs obtenus via une addition 1,4 lors de la polymérisation du butadiène. Par motifs à doubles liaisons 1-2 issus du butadiène, on entend les motifs obtenus via une addition 1,2 lors de la polymérisation du butadiène. Le résultat de cette addition 1,2 est une double liaison vinylique dite « pendante ».

Le copolymère de styrène et de butadiène, possède une teneur en motifs à doubles liaisons 1-2 issus du butadiène, comprise entre 10% et 40% en masse, par rapport à la masse totale des motifs butadiène, de préférence entre 15% et 30%, plus préférentiellement entre 18% et 25%, encore plus préférentiellement entre 18% et 23% ou entre 20% et 25%, encore plus préférentiellement entre 20% et 23%, encore plus préférentiellement entre 21% et 22%. Le copolymère de styrène et de butadiène, possédant une teneur en motifs à doubles liaisons 1-2 issus du butadiène, telle que définie ci-dessus pourra être utilisé avec ou sans agent réticulant, car il a la propriété d'être « auto-réticulant », les branches de copolymère sont réticulées, liées entre elles via ces doubles liaisons vinyliques dite « pendantes ».
La composition bitume/polymère réticulée selon l'invention, comprend de 2% à 8% en masse de copolymère de styrène et de butadiène, par rapport à la masse de la composition bitume/polymère réticulée, de préférence de 3% à 5%.

En plus de ce copolymère de styrène et de butadiène, la composition bitume/polymère réticulée peut comprendre éventuellement un autre type de polymère choisi parmi les polybutadiènes, les polyisoprènes, les caoutchoucs butyle, les polyacrylates, les polymétacrylates, les polychloroprènes, les polynorbornènes, les polybutènes, les polyisobutènes, les polyéthylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment terpolymère éthylène/acrylate de méthyle/méthacrylate de glycidyle et terpolymères éthylène /acrylate ou méthacrylate d'alkyle/anhydride maléique et notamment terpolymère éthylène/acrylate de butyle/anhydride maléique.

La réticulation du copolymère de styrène et de butadiène, dans la composition bitume/polymère réticulée, est réalisée grâce à l'utilisation d'un copolymère de styrène et de butadiène, tel que défini ci-dessus et d'un agent réticulant, ou grâce à l'utilisation d'un copolymère de styrène et de butadiène, ayant une quantité particulière de motifs à doubles liaisons 1-2 issus du butadiène, cette quantité de motifs à doubles liaisons 1-2 issus du butadiène, étant comprise entre 10% et 40% en masse, par rapport à la masse totale des motifs butadiène, de préférence entre 15% et 30%, plus préférentiellement entre 18% et 25%, encore plus préférentiellement entre 18% et 23% ou entre 20% et 25% ou bien encore grâce à l'utilisation dudit copolymère de styrène et de butadiène, ayant la quantité particulière définie ci-dessus de motifs à doubles liaisons 1-2 issus du butadiène, en combinaison avec un agent réticulant.

De préférence, l'agent réticulant est choisi parmi le soufre et les polysulfures d'hydrocarbyle, pris seuls ou en mélange, en présence éventuelle d'accélérateurs de vulcanisation donneurs de soufre ou non donneurs de soufre, pris seuls ou en mélange.

Le soufre est notamment du soufre en fleur ou encore du soufre cristallisé alpha.

Les polysulfures d'hydrocarbyle sont par exemple, choisis parmi les disulfures de dihexyle, les disulfures de dioctyle, les disulfures de didodécyle, les disulfures de ditertiododécyle, les disulfures de dihexadécyle, les trisulfures de dihexyle, les trisulfures de dioctyle, les trisulfures de dinonyle, les trisulfures de ditertiododécyle, les trisulfures de dihexadécyle, les trisulfures de diphényle, les trisulfures de dibenzyle, les tétrasulfures de dihexyle, les tétrasulfures de dioctyle, les tétrasulfures de dinonyle, les tétrasulfures de ditertiododécyle, les tétrasulfures de dihexadécyle, les tétrasulfures de diphényle, les tétrasulfures d'orthotolyle, les tétrasulfures de dibenzyle, les pentasulfures de dihexyle, les pentasulfures de dioctyle, les pentasulfures de dinonyle, les pentasulfures de ditertiododécyle, les pentasulfures de dihexadécyle, les pentasulfures de dibenzyle, les pentasulfures de diallyle.

Les accélérateurs de vulcanisation donneurs de soufre, peuvent être choisis parmi les polysulfures de thiurame, comme par exemple, les disulfures de tétrabutylthiurame, les disulfures de tétraéthylthiurame et les disulfures de tétraméthylthiurame, les disulfures de dipentaméthylènethiurame, les tétrasulfures de dipentaméthylènethiurame ou les hexasulfures de dipentaméthylènethiurame.

Les accélérateurs de vulcanisation non donneurs de soufre utilisables selon l'invention peuvent être choisis notamment parmi le mercaptobenzothiazole et ses dérivés, les dithiocarbamates et ses dérivés, et les monosulfures de thiurame et ses dérivés, pris seuls ou en mélange. On peut citer comme exemples d'accélérateurs de vulcanisation non donneurs de soufre, le 2-mercaptobenzothiazole de zinc, le benzothiazolethiolate de zinc, le benzothiazolethiolate de sodium, le disulfure de benzothiazyle, le benzothiazolethiolate de cuivre, le N, N'-diéthylthiocarbamylesulfure de benzothiazyle et les benzothiazolesulfénamides comme le 2-benzothiazolediéthylsulfénamide, le 2-benzothiazolepentaméthylènesulfénamide, le 2-benzothiazolecyclohexylsulfénamide, le N-oxydiéthylène 2-benzothiazolesulfénamide, le N-oxydiéthylène 2-benzothiazolethiosulfénamide, le 2-benzothiazoledicyclohexylsulfénamide, le 2-benzothiazolediisopropylsulfénamide, le 2-benzothiazoletertiobutylsulfénamide, le diméthyldithiocarbamate de bismuth, le diamyldithiocarbamate de cadmium, le diéthyldithiocarbamate de cadmium, le diméthyldithiocarbamate de cuivre, le diamyldithiocarbamate de plomb, le diméthyldithiocarbamate de plomb, le pentaméthylènedithiocarbamate de plomb, le diméthyldithiocarbamate de sélénium, le diéthyldithiocarbamate de tellure, le diamyldithiocarbamate de zinc, le dibenzyldithiocarbamate de zinc, le diéthyldithiocarbamate de zinc, le diméthyldithiocarbamate de zinc, le dibutyldithiocarbamate de zinc, le pentaméthylènedithiocarbamate de zinc, le monosulfure de dipentaméthylènethiurame, le monosulfure de tétrabutylthiurame, le monosulfure de tétraéthylthiurame et le mono sulfure de tétraméthylthiurame.

L'agent réticulant peut aussi être choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène. Parmi les composés répondant à cette formule générale, on peut citer par exemple, le 1,2 éthanedithiol, le 1,3 propanedithiol, le 1,4 butanedithiol, le 1,5 pentanedithiol, le 1,6 hexanedithiol, le 1,7 heptanedithiol, le 1,8 octanedithiol, le bis-(2-mercaptoéthyl)éther, le bis-(3-mercaptoéthyl)éther, le bis-(4-mercaptoéthyl)éther, le (2-mercaptoéthyl) (3-mercaptobutyl)éther, le (2-mercaptoéthyl) (4-mercaptobutyl)éther, le 1,8-dimercapto-3,6-dioxaoctane, le benzène-1,2-dithiol, le benzène-1,3-dithiol, le benzène-1,4-dithiol ou le toluène-3,4-dithiol, le biphenyl-4,4'-dithiol.

On utilise en général une quantité d'agent réticulant entre 0,05% et 5% en masse, par rapport à la masse de la composition bitume/polymère réticulée, de préférence entre 0,1% et 2%, plus préférentiellement entre 0,2% et 1%, encore plus préférentiellement entre 0,3% et 0,5%.

De préférence, les quantités de polymère et d'agent réticulant sont fixées de manière à obtenir un ratio polymère/agent réticulant (copolymère de styrène et de butadiène/agent réticulant) compris entre 50:1 et 150 :1, de préférence entre 60 :1 et 100 :1, plus préférentiellement entre 70 :1 et 80 :1.

La réticulation des compositions bitume/polymère réticulées peut être mise en évidence en effectuant sur ces compositions bitume/polymère réticulées, des tests de traction selon la norme NF EN 13587. Les compositions bitume/polymère réticulées ont une résistance à la traction plus élevée que les compositions bitume/polymère non réticulées. Une résistance à la traction plus élevée se traduit par un allongement à la rupture ou élongation maximale ($\epsilon$ max en %) élevée, une contrainte à la rupture ou contrainte à l'élongation maximale ($\sigma$ $\epsilon$ max en MPa) élevée, une énergie conventionnelle à 400% (E 400% en $J/cm^2$) élevée et/ou une énergie totale (E totale en J) élevée.

Les compositions bitume/polymère réticulées ont une élongation maximale, selon la norme NF EN 13587, supérieure ou égale à 400%, de préférence supérieure ou égale à 500%, plus préférentiellement supérieure ou égale à 600%, encore plus préférentiellement supérieure ou égale à 700%.

Les compositions bitume/polymère réticulées ont une contrainte à l'élongation maximale, selon la norme NF EN 13587, supérieure ou égale à 0,4 MPa, de préférence supérieure ou égale à 0,6 MPa, plus préférentiellement supérieure ou égale à 0,8 MPa, encore plus préférentiellement supérieure ou égale à 1,2 MPa.

Les compositions bitume/polymère réticulées ont une énergie conventionnelle à 400%, selon la norme NF EN 13587, supérieure ou égale à 3 $J/cm^2$, de préférence supérieure ou égale à 5 $J/cm^2$, plus préférentiellement supérieure ou égale à 10 $J/cm^2$, encore plus préférentiellement supérieure ou égale à 15 $J/cm^2$.

Les compositions bitume/polymère réticulées ont une énergie totale, selon la norme NF EN 13587, supérieure ou égale à 1 J, de préférence supérieure ou égale à 2 J, plus préférentiellement supérieure ou égale à 4 J, encore plus préférentiellement supérieure ou égale à 5 J.

La composition bitume/polymère réticulée peut aussi éventuellement comprendre des dopes d'adhésivité et/ou des agents tensioactifs. Ils sont choisis parmi les dérivés d'alkylamines, les dérivés d'alkyl-polyamines, les dérivés d'alkylamidopolyamines, les dérivés d'alkyl amidopolyamines et les dérivés de sels d'ammonium quaternaire, pris seuls ou en mélange. Les plus utilisés sont les propylènes-diamines de suif, les amido-amines de suif, les ammoniums quaternaires obtenus par quaternisation des propylènes-diamines de suif, les propylènes-polyamines de suif. La quantité de dopes d'adhésivité et/ou des agents tensioactifs dans la composition bitume/polymère réticulée est comprise entre 0,1% et 2% en masse, par rapport à la masse de la composition bitume/polymère réticulée, de préférence entre 0,2% et 1%.

On prépare tout d'abord la composition bitume/polymère réticulée sans cires Fischer-Tropsch, en mélangeant le bitume, le copolymère de styrène et de butadiène, qui possède une teneur en motifs à doubles liaisons 1-2 issus du butadiène, comprise entre 10% et 40% en masse, par rapport à la masse totale des motifs butadiène et une masse moléculaire moyenne Mw comprise entre 10 000 et 500 000 daltons, mesurée par chromatographie GPC avec un étalon polystyrène selon la norme ASTM D3536, et éventuellement l'agent réticulant à une température de 120°C à 220°C, de préférence de 140°C à 200°C, plus préférentiellement de 160°C à 180°C, pendant une durée de 1 heure à 48 heures, de préférence de 4 heures à 24 heures, plus préférentiellement de 8 heures à 16 heures.

Lorsque la composition bitume/polymère est réticulée, on ajoute alors de 2% à 6% en masse de cires Fischer-Tropsch à la composition bitume/polymère réticulée à une température de 120°C à 220°C, de préférence de 140°C à 200°C, plus préférentiellement de 160°C à 180°C, pendant une durée de 30 minutes à 48 heures, de préférence de 1 heure à 24 heures, plus préférentiellement de 2 heures à 16 heures, encore plus préférentiellement de 4 heures à 8 heures.

Les compositions bitume/polymère réticulées comprenant les cires Fischer-Tropsch sont essentiellement destinées à produire des enrobés bitumineux ou des enduits superficiels pour les applications routières.

Dans le cas des enrobés bitumineux, les compositions bitume/polymère réticulées comprenant les cires Fischer-Tropsch seront mélangées avec des granulats pour fournir des enrobés bitumineux résistants aux hydrocarbures pétroliers choisis parmi les kérosènes et/ou les gazoles. La quantité de composition bitume/polymère réticulée comprenant les cires Fischer-Tropsch dans l'enrobé bitumineux est comprise entre 2 et 8%, de préférence entre 3 et 5%, le reste étant constitués par les granulats.

Les enrobés bitumineux seront utilisés comme couche de surface dans des zones où la surface peut entrer en contact avec des hydrocarbures, pétroliers choisis parmi les kérosènes et/ou les gazoles, par exemple, en raison, d'écoulements. De telles surfaces comprennent par exemple les parcs de stationnement, les tarmacs et pistes d'aéroports, les stations-service, les ronds-points, les dépôts d'hydrocarbures.

Il est décrit que les cires Fischer-Tropsch seront utilisées pour améliorer la résistance des compositions bitume/polymère réticulées aux agressions chimiques engendrées par les hydrocarbures, en particulier par les hydrocarbures pétroliers, tels que les essences, les carburants, les supercarburants, les kérosènes, les carburéacteurs, les gazoles, les fuels. Il est décrit qu'une très nette amélioration de la résistance aux agressions chimiques pour les hydrocarbures pétroliers tels que les essences, les kérosènes et/ou les gazoles, a été observée. De même il est décrit qu'une amélioration a aussi été observée pour les produits utilisés pour le déverglaçage et/ou le dégivrage et/ou le déneigement, tels que les solutions salines aqueuses de potassium, sodium, magnésium et/ou calcium, et/ou les compositions à base d'éthylène glycol et/ou à base de propylène glycol.

## EXEMPLES

La résistance aux hydrocarbures des compositions bitume/polymère réticulées est évaluée selon une méthode interne proche de la méthode utilisée pour mesurer la Température Bille et Anneau des bitumes (EN 1427).

Les anneaux remplis de compositions bitume/polymère réticulées sont placés dans les supports habituellement utilisés dans la méthode EN 1427, des billes de 5 g sont placées sur ces supports. Les supports sont placés dans un bécher rempli de kérosène, au lieu de l'eau habituellement utilisée dans la méthode EN 1427 standard. La résistance des compositions bitume/polymère réticulées au kérosène est évaluée à température ambiante et sous agitation. On évalue la durée, le temps de ramollissement des deux disques bitumineux jusqu'à ce que chaque bille, enveloppée de compositions bitume/polymère réticulées, descende d'une hauteur de $(25,0 \pm 0,4)$ mm. Le problème de la dissolution des compositions bitume/polymère réticulées dans le kérosène se pose. Le liquide dans le bécher devient alors opaque, et il est impossible de savoir visuellement quand les billes tombent. Nous avons procédé par inspection en sortant les supports à intervalles de temps réguliers.

Différentes compositions bitume/polymère réticulées sont préparées à partir de :

- bitume de pénétrabilité égale à 41 1/10 mm et de température Bille et Anneau égale à 51,8°C,
- copolymère dibloc de styrène et de butadiène $SB_1$ comprenant 25% en masse de styrène, par rapport à la masse du copolymère, et 12% de motifs à double liaison 1-2 issus du butadiène, par rapport à la masse de butadiène et une masse moléculaire Mw de 115000 daltons,
- copolymère dibloc de styrène et de butadiène $SB_2$ comprenant 33% en masse de styrène, par rapport à la masse du copolymère, et 18,5% de motifs à double liaison 1-2 issus du butadiène, par rapport à la masse de butadiène et une masse moléculaire Mw de 129000 daltons,
- soufre en fleur,
- cire Fischer-Tropsch (Sasobit®),

dans les quantités en % indiquées au Tableau I ci-dessous.

Tableau I

| Compositions bitumineuses | $C_1$ | $C_2$ | $C_3$ | $C_4$ | $C_5$ | $C_6$ |
|---|---|---|---|---|---|---|
| Bitume | 100 | 98 | 95,9 | 93,9 | 96,5 | 94,5 |
| Copolymère $SB_1$ | - | - | 4 | 4 | - | - |
| Copolymère $SB_2$ | - | - | - | - | 3,5 | 3,5 |

(suite)

| Compositions bitumineuses | $C_1$ | $C_2$ | $C_3$ | $C_4$ | $C_5$ | $C_6$ |
|---|---|---|---|---|---|---|
| Soufre | - | - | 0,1 | 0,1 | - | - |
| Sasobit® | - | 2 | - | 2 | - | 2 |

Les compositions sont préparées de la manière suivante :

Pour la composition bitumineuse $C_2$, on introduit un bitume dans un réacteur maintenu à 185°C sous agitation à 300 tours/min. Le contenu du réacteur est maintenu à 185°C sous agitation à 300 tours/min pendant 10 minutes. On introduit ensuite dans le réacteur la cire Fischer-Tropsch. Le contenu du réacteur est maintenu à 185°C sous agitation à 300 tours/min pendant 1 heure.

Pour la composition bitume/polymère réticulée $C_3$, on introduit dans un réacteur maintenu à 185°C et sous agitation à 300 tours/min, le bitume et le copolymère styrène/butadiène $SB_1$. Le contenu du réacteur est ensuite maintenu à 185°C sous agitation à 300 tours/min pendant 4 heures. On introduit ensuite dans le réacteur le soufre en fleur. Le contenu du réacteur est maintenu à 185°C sous agitation à 300 tours/min pendant 2 heures, puis à 185°C sous agitation à 150 tours/min pendant 12 heures.

Pour la composition bitume/polymère réticulée $C_4$, on procède de la même manière et on introduit ensuite dans le réacteur la cire Fischer-Tropsch. Le contenu du réacteur est maintenu à 185°C sous agitation à 300 tours/min pendant 1 heure.

Pour la composition bitume/polymère réticulée $C_5$, on introduit dans un réacteur maintenu à 190°C sous agitation à 300 tours/min, le bitume et le copolymère styrène/butadiène $SB_2$. Le contenu du réacteur est ensuite maintenu à 190°C sous agitation à 300 tours/min pendant 24 heures.

Pour la composition bitume/polymère réticulée $C_6$, on procède de la même manière et on introduit ensuite dans le réacteur la cire Fischer-Tropsch. Le contenu du réacteur est maintenu à 190°C sous agitation à 300 tours/min pendant 1 heure.

Les compositions $C_1$ à $C_3$ correspondent à des compositions témoins, tout comme la composition $C_5$. La composition bitumineuse $C_1$ est une composition bitumineuse témoin constituée de bitume uniquement. La composition bitumineuse témoin $C_2$ est constituée de bitume et de cire Fischer-Tropsch. La composition bitume/polymère réticulée témoin $C_3$ est constituée de bitume et de copolymère de styrène et de butadiène $SB_1$ réticulé au soufre. La composition bitume/polymère réticulée témoin $C_5$ est constituée de bitume et de copolymère de styrène et de butadiène $SB_2$ réticulé thermiquement sans soufre.

La composition $C_4$ correspond à une composition bitume/polymère réticulée selon l'invention. Elle est constituée de bitume, de copolymère de styrène et de butadiène $SB_1$ réticulé au soufre et de cire Fischer-Tropsch.

La composition $C_6$ correspond à une composition bitume/polymère réticulée selon l'invention. Elle est constituée de bitume, de copolymère de styrène et de butadiène $SB_2$ réticulé thermiquement sans soufre et de cire Fischer-Tropsch.

Pour les compositions $C_1$ à $C_6$, on détermine les caractéristiques suivantes :

(1) pénétrabilité à 25°C notée $P_{25}$ (1/10 mm) mesurée selon la norme EN 1426,

(2) température Bille et Anneau notée TBA (°C) mesurée selon la norme EN 1427,

(3) indice de Pfeiffer noté IP défini par la formule ci-dessus :

$$IP = \frac{1952 - 500 \times \log(P_{25}) - 20 \times TBA}{50 \times \log(P_{25}) - TBA - 120}$$

(4) retour élastique noté RE (%) mesuré à 25°C selon la norme NF EN 13398,

(5) le temps nécessaire pour que la bille descende d'une hauteur de (25,0 ± 0,4) mm, les résultats sont consignés dans le Tableau II ci-dessous.

Tableau II

| Compositions bitumineuses | $C_1$ | $C_2$ | $C_3$ | $C_4$ | $C_5$ | $C_6$ |
|---|---|---|---|---|---|---|
| $P_{25}$ (1/10 mm) | 41 | 22,8 | 28,4 | 23,0 | 34,0 | 24,0 |
| TBA (°C) | 51,8 | 69,2 | 74,0 | 80,2 | 60,4 | 78,0 |

(suite)

| Compositions bitumineuses | C$_1$ | C$_2$ | C$_3$ | C$_4$ | C$_5$ | C$_6$ |
|---|---|---|---|---|---|---|
| IP | -1,19 | 0,91 | 2,09 | 2,52 | 0,2 | 2,3 |
| RE (%) | - | - | 76 | 69 | - | - |
| Temps | 30 min | 1h30 | 1h30 | 10h | 1h10 | 17h |

On constate que la résistance au kérosène de la composition bitumineuse C$_1$ est très mauvaise, celle-ci ne résiste que 30 minutes dans un bain de kérosène. Lorsqu'on ajoute 2% de cire Fischer-Tropsch à cette composition bitumineuse C$_1$, on obtient la composition bitumineuse C$_2$ qui elle résiste 1 heure et 30 minutes dans un bain de kérosène.

Lorsqu'on ajoute 4% de copolymère de styrène et de butadiène SB$_1$ et 0,1% de soufre à la composition bitumineuse C$_1$, on obtient la composition bitume/polymère réticulée C$_3$ qui elle aussi résiste 1 heure et 30 minutes dans un bain de kérosène.

La composition bitume/polymère réticulée C$_4$ qui comprend à la fois un copolymère de styrène et de butadiène SB$_1$ réticulé (tel que dans la composition bitume/polymère réticulée C$_3$) et une cire Fischer-Trospch (tel que dans la composition bitumineuse C$_2$), elle résiste plus de 10 heures dans un bain de kérosène. Ceci démontre que l'effet combiné des cires Fischer-Trospch et du copolymère de styrène et de butadiène réticulé est supérieur à la somme des effets obtenus pour les cires Fischer-Trospch seules ou le copolymère de styrène et de butadiène réticulé seul. Un effet de synergie est donc observé.

De même, la composition bitume/polymère réticulée C$_5$ qui comprend 3,5% de copolymère de styrène et de butadiène SB$_2$ réticulé thermiquement sans soufre résiste 1 heure et 10 minutes dans un bain de kérosène, alors que la composition bitume/polymère réticulée C$_6$ qui comprend à la fois un copolymère de styrène et de butadiène SB$_2$ réticulé thermiquement sans soufre et une cire Fischer-Trospch, résiste 17 heures.

Des essais de résistance aux hydrocarbures sont également effectués selon la norme EN12697-43 sur des enrobés bitumineux.

Les enrobés bitumineux E$_1$, E$_3$ et E$_4$ comprennent respectivement 5,6% en masse de composition C$_1$, C$_3$ ou C$_4$, par rapport à la masse de l'enrobé bitumineux, et 94,4% en masse de granulats (composition des granulats : 38% en masse de granulats 6/10, par rapport à la masse des granulats, 5% en masse de granulats 4/6, 5% en masse de granulats 2/4, 48% en masse de sable 0/2 et 4% en masse de charges, teneur en vides 8,5-9,5%).

Les enrobés sont préparés par mélange des compositions et des granulats à 180°C.

Les essais sont réalisés suivant la norme EN12697-43 dans du gazole et du kérosène. Les résultats sont consignés dans le Tableau III ci-dessous.

Tableau III

| Enrobés bitumineux | E$_1$ | E$_3$ | E$_4$ |
|---|---|---|---|
| Résistance gazole 24 h (A/B) | 5/4 | 3/3 | 0/3 |
| Résistance gazole 72 h (A/B) | - | 4/7 | 0/5 |
| Résistance kérosène 24 h (A/B) | 13/11 | 6/5 | 1/5 |
| Résistance kérosène 72 h (A/B) | - | 9/10 | 1/10 |

On constate que l'enrobé bitumineux E$_4$ est plus résistant au gazole et au kérosène que les enrobés bitumineux E$_1$ et E$_3$, toutes les valeurs A et B de l'enrobé bitumineux E$_4$ étant inférieures ou égales à celles des enrobés bitumineux E$_1$ et E$_3$. L'ajout de 2% en masse de cires Fischer-Tropsch (1) dans une composition bitume/polymère réticulée a donc amélioré très nettement la résistance de cette composition bitume/polymère réticulée vis-à-vis du gazole et du kérosène.

**Revendications**

1. Utilisation de 2% à 6% en masse de cires Fischer-Tropsch, par rapport à la masse de la composition bitume/polymère réticulée comprenant un copolymère réticulé de styrène et de butadiène, la composition bitume/polymère réticulée comprenant de 2% à 8% en masse d'un copolymère de styrène et de butadiène, par rapport à la masse de la composition bitume/polymère réticulée dans une composition bitume/polymère réticulée, pour améliorer la résistance aux hydrocarbures pétroliers choisis parmi les kérosènes et/ou les gazoles de ladite composition bitume/polymère réticulée, ledit copolymère de styrène et de butadiène possède une teneur en motifs à doubles liaisons 1-2 issus du butadiène, comprise entre 10% et 40% en masse, par rapport à la masse totale des motifs butadiène et possède une masse moléculaire moyenne $M_w$ comprise entre 10 000 et 500 000 daltons, mesurée par chromatographie GPC avec un étalon polystyrène selon la norme ASTM D3536,

ladite composition bitume/polymère réticulée présentant une élongation maximale, selon la norme NF EN 13587, supérieure ou égale à 400%, une contrainte à l'élongation maximale, selon la norme NF EN 13587, supérieure ou égale à 0,4 MPa, une énergie conventionnelle à 400%, selon la norme NF EN 13587, supérieure ou égale à 3 J/cm$^2$ et une énergie totale, selon la norme NF EN 13587, supérieure ou égale à 1 J.

2. Utilisation selon la revendication 1 dans laquelle le copolymère de styrène et de butadiène possède une teneur en motifs à doubles liaisons 1-2 issus dubutadiène, comprise entre 15% et 30% en masse, par rapport à la masse totale des motifs butadiène.

3. Utilisation selon la revendication 1 ou 2 dans laquelle le copolymère de styrène et de butadiène est associé à un agent réticulant.

4. Utilisation selon la revendication 3 dans laquelle l'agent réticulant comprend du soufre en fleur.

5. Utilisation selon la revendication 3 dans laquelle l'agent réticulant est choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes.

6. Utilisation selon l'une quelconque des revendications 1 à 5 dans laquelle la composition bitume/polymère réticulée comprend de 3% à 6% en masse de copolymère de styrène et de butadiène, par rapport à la masse de la composition bitume/polymère réticulée.

7. Utilisation selon l'une quelconque des revendications 3 à 5 dans laquelle la composition bitume/polymère réticulée comprend de 0,05% à 5% en masse d'agent réticulant, par rapport à la masse de la composition bitume/polymère réticulée.

8. Utilisation selon l'une quelconque des revendications 1 à 7 dans laquelle la quantité de cires Fischer-Tropsch dans la composition bitume/polymère réticulée est comprise entre 3% et 6% en masse, par rapport à la masse de la composition bitume/polymère réticulée.

9. Utilisation selon l'une quelconque des revendications 1 à 8 pour améliorer la résistance aux hydrocarbures pétroliers choisis parmi les kérosènes et/ou les gazoles de la composition bitume/polymère réticulée lorsque celle-ci est utilisée en application routière comme couche de surface.

10. Utilisation selon l'une quelconque des revendications 1 à 9 pour améliorer la résistance aux hydrocarbures pétroliers choisis parmi les kérosènes et/ou les gazoles de la composition bitume/polymère réticulée lorsque celle-ci est en mélange avec des granulats dans un enrobé bitumineux.

11. Composition bitume/polymère réticulée comprenant :

- au moins un bitume,
- de 2% à 6% en masse de cires Fischer-Tropsch, par rapport à la masse de la composition bitume/polymère réticulée
- et de 2% à 8% en masse par rapport à la masse de la composition bitume/polymère réticulée d'un copolymère de styrène et de butadiène qui possède une teneur en motifs à doubles liaisons 1-2 issus du butadiène, comprise entre 10% et 40% en masse, par rapport à la masse totale des motifs butadiène, et une masse moléculaire moyenne Mw comprise entre 10 000 et 500 000 daltons, mesurée par chromatographie GPC avec un étalon polystyrène selon la norme ASTM D3536,

ladite composition bitume/polymère réticulée présentant une élongation maximale, selon la norme NF EN 13587, supérieure ou égale à 400%, une contrainte à l'élongation maximale, selon la norme NF EN 13587, supérieure ou égale à 0,4 MPa, une énergie conventionnelle à 400%, selon la norme NF EN 13587, supérieure ou égale à 3 J/cm$^2$ et une énergie totale, selon la norme NF EN 13587, supérieure ou égale à 1 J.

**12.** Composition bitume/polymère selon la revendication 11, réticulée sans agent réticulant.

**13.** Composition bitume/polymère réticulée comprenant :

- au moins un bitume,
- de 2% à 6% en masse de cires Fischer-Tropsch, par rapport à la masse de la composition bitume/polymère réticulée,
- de 2% à 8% en masse par rapport à la masse de la composition bitume/polymère réticulée d'un copolymère de styrène et de butadiène qui possède une teneur en motifs à doubles liaisons 1-2 issus du butadiène, comprise entre 10% et 40% en masse, par rapport à la masse totale des motifs butadiène, et une masse moléculaire moyenne Mw comprise entre 10 000 et 500 000 daltons, mesurée par chromatographie GPC avec un étalon polystyrène selon la norme ASTM D3536,
- et au moins un agent réticulant choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes,

ladite composition bitume/polymère réticulée présentant une élongation maximale, selon la norme NF EN 13587, supérieure ou égale à 400%, une contrainte à l'élongation maximale, selon la norme NF EN 13587, supérieure ou égale à 0,4 MPa, une énergie conventionnelle à 400%, selon la norme NF EN 13587, supérieure ou égale à 3 J/cm$^2$ et une énergie totale, selon la norme NF EN 13587, supérieure ou égale à 1 J.

**14.** Composition bitume/polymère réticulée selon la revendication 11, 12 ou 13 comprenant entre 3% et 7% en masse de copolymère de styrène et de butadiène, par rapport à la masse de la composition bitume/polymère réticulée.

**15.** Composition bitume/polymère réticulée selon l'une quelconque des revendications 11 à 14 comprenant entre 3% et 6% en masse de cires Fischer-Tropsch, par rapport à la masse de la composition bitume/polymère réticulée.

**16.** Procédé de préparation d'une composition bitume/polymère réticulée selon la revendication 11 ou 12, ou l'une quelconque des revendications 14 à 15 dans lequel on met d'abord en contact entre 120°C et 220°C, pendant une période de 1 heure à 48 heures, au moins un bitume, au moins un copolymère de styrène et de butadiène, qui possède une teneur en motifs à doubles liaisons 1-2 issus du butadiène, comprise entre 10% et 40% en masse, par rapport à la masse totale des motifs butadiène et une masse moléculaire moyenne Mw comprise entre 10 000 et 500 000 daltons, mesurée par chromatographie GPC avec un étalon polystyrène selon la norme ASTM D3536, éventuellement au moins un agent réticulant, puis on met en contact ledit mélange, entre 120°C et 220°C, pendant une période de 30 minutes à 48 heures, avec 2% à 6% en masse de cires Fischer-Tropsch.

**17.** Procédé de préparation d'une composition bitume/polymère réticulée selon l'une quelconque des revendications 13 à 15, dans lequel on met d'abord en contact entre 120°C et 220°C, pendant une période de 1 heure à 48 heures, au moins un bitume, au moins un copolymère de styrène et de butadiène, qui possède une teneur en motifs à doubles liaisons 1-2 issus du butadiène, comprise entre 10% et 40% en masse, par rapport à la masse totale des motifs butadiène et une masse moléculaire moyenne Mw comprise entre 10 000 et 500 000 daltons, mesurée par chromatographie GPC avec un étalon polystyrène selon la norme ASTM D3536, et au moins un agent réticulant choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, puis on met en contact ledit mélange, entre 120°C et 220°C, pendant une période de 30 minutes à 48 heures, avec 2% à 6% en masse de cires Fischer-Tropsch.

**18.** Enrobé bitumineux comprenant une composition bitume/polymère réticulée selon l'une quelconque des revendications 11 à 15 en mélange avec des granulats.

**19.** Procédé de préparation d'un enrobé bitumineux selon la revendication 18 dans lequel on mélange les granulats et la composition bitume/polymère réticulée selon l'une quelconque des revendications 11 à 15 entre 120°C et 220°C.

**Patentansprüche**

**1.** Verwendung von 2 bis 6 Massen-% von Fischer-Tropsch Wachsen, bezogen auf die Masse der vernetzten Bitumen/Polymerzusammensetzung, welche ein vernetztes Styrol- und Butadiencopolymer umfasst, wobei die vernetzte Bitumen/Polymerzusammensetzung 2 bis 8 Massen-% eines Styrol- und Butadiencopolymers, bezogen auf die Masse der vernetzten Bitumen/Polymerzusammensetzung in einer vernetzten Bitumen/Polymerzusammensetzung, umfasst, um die Festigkeit gegen Erdölkohlenwasserstoffe, ausgewählt aus den Kerosinen und/oder den Gasölen der vernetzten Bitumen/Polymerzusammensetzung zu verbessern, wobei das Styrol- und Butadiencopolymer einen Gehalt an Einheiten mit, von Butadien abgeleiteten Doppelbindungen 1-2 aufweist, der im Bereich von zwischen 10 und 40 Massen-%, bezogen auf die Gesamtmasse der Butadieneinheiten, liegt, und eine zwischen 10 000 und 500 000 Dalton liegende, durchschnittliche Molekularmasse $M_w$ aufweist, die durch GPC-Chromatographie mit einem Polystyrolstandard nach der Norm ASTM D3536 gemessen wird,

wobei die vernetzte Bitumen/Polymerzusammensetzung eine maximale Ausdehnung nach der Norm NF EN 13587 von größer oder gleich 400%, eine maximale Ausdehnungsbelastung nach der Norm NF EN 13587 von größer oder gleich 0,4 MPa, eine konventionelle Energie von 400% nach der Norm NF EN 13587 von größer oder gleich 3 J/cm$^2$ und eine Gesamtenergie nach der Norm NF EN 13587 von größer oder gleich 1 J aufweist.

2. Verwendung nach Anspruch 1, wobei das Styrol- und Butadiencopolymer einen Gehalt an Einheiten mit, von Butadien abgeleiteten Doppelbindungen 1-2 aufweist, der, bezogen auf die Gesamtmasse der Butadieneinheiten, zwischen 15 und 30 Massen-% liegt.

3. Verwendung nach Ansprüchen 1 oder 2, wobei das Styrol- und Butadien-copolymer mit einem Vernetzungsmittel assoziiert ist.

4. Verwendung nach Anspruch 3, wobei das Vernetzungsmittel Schwefelblüte umfasst.

5. Verwendung nach Anspruch 3, wobei das Vernetzungsmittel aus den Verbindungen der allgemeinen Formel HS-R-SH ausgewählt ist, wobei R eine gesättigte oder ungesättigte, lineare oder vernetzte Kohlenwasserstoffgruppe von 2 bis 40 Wasserstoffatomen darstellt, die gegebenenfalls eines oder mehrere Heteroatome umfasst.

6. Verwendung nach einem der Ansprüche 1 bis 5, wobei die vernetzte Bitumen/Polymerzusammensetzung von 3 bis 6 Massen-% Styrol- und Butadiencopolymer, bezogen auf die Masse der vernetzten Bitumen/Polymerzusammensetzung, umfasst.

7. Verwendung nach einem der Ansprüche 3 bis 5, wobei die vernetzte Bitumen/Polymerzusammensetzung von 0,05 bis 5 Massen-% Vernetzungsmittel, bezogen auf die Masse der vernetzten Bitumen/Polymerzusammensetzung, umfasst.

8. Verwendung nach einem der Ansprüche 1 bis 7, wobei die Menge von Fischer-Tropsch Wachsen in der vernetzten Bitumen/Polymerzusammensetzung im Bereich von zwischen 3 und 6 Massen-%, bezogen auf die Masse der vernetzten Bitumen/Polymerzusammensetzung, liegt.

9. Verwendung nach einem der Ansprüche 1 bis 8 zur Verbesserung der Festigkeit gegen Erdölkohlenwasserstoffe die aus den Kerosinen und/oder den Gasölen der vernetzten Bitumen/Polymerzusammensetzung ausgewählt sind, wenn diese für Straßenbauzwecke als Oberflächenschicht verwendet wird.

10. Verwendung nach einem der Ansprüche 1 bis 9 zur Verbesserung der Festigkeit gegen Erdölkohlenwasserstoffe die aus den Kerosinen und/oder den Gasölen der vernetzten Bitumen/Polymerzusammensetzung ausgewählt sind, wenn diese in Mischung mit Granulaten in einem bituminösen Mischgut verwendet wird.

11. Vernetzte Bitumen/Polymerzusammensetzung, umfassend:

- mindestens ein Bitumen,
- von 2 bis 6 Massen-% von Fischer-Tropsch Wachsen, bezogen auf die Masse der vernetzten Bitumen/Polymerzusammensetzung, und
- von 2 bis 8 Massen-%, bezogen auf die Masse der vernetzten Bitumen/Polymerzusammensetzung eines Styrol- und Butadiencopolymers, das einen Gehalt an Einheiten mit, von Butadien abgeleiteten Doppelbindungen 1-2 aufweist, der im Bereich von zwischen 10 und 40 Massen-%, bezogen auf die Gesamtmasse der Butadieneinheiten, liegt, und eine zwischen 10 000 und 500 000 Dalton liegende, durchschnittliche Molekularmasse $M_w$ aufweist, die durch GPC-Chromatographie mit einem Polystyrolstandard nach der Norm ASTM D3536 gemessen wird,

wobei die vernetzte Bitumen/Polymerzusammensetzung eine maximale Ausdehnung nach der Norm NF EN 13587 von größer oder gleich 400%, eine maximale Ausdehnungsbelastung nach der Norm NF EN 13587 von größer oder gleich 0,4 MPa, eine konventionelle Energie von 400% nach der Norm NF EN 13587 von größer oder gleich 3 J/cm$^2$ und eine Gesamtenergie nach der Norm NF EN 13587 von größer oder gleich 1 J aufweist.

**12.** Bitumen/Polymerzusammensetzung nach Anspruch 11, die ohne Vernetzungsmittel vernetzt ist.

**13.** Vernetzte Bitumen/Polymerzusammensetzung, umfassend:

- mindestens ein Bitumen,
- von 2 bis 6 Massen-% von Fischer-Tropsch Wachsen, bezogen auf die Masse der vernetzten Bitumen/Polymerzusammensetzung,
- von 2 bis 8 Massen-%, bezogen auf die Masse der vernetzten Bitumen/Polymerzusammensetzung eines Styrol- und Butadiencopolymers, das einen Gehalt an Einheiten mit, von Butadien abgeleiteten Doppelbindungen 1-2 aufweist, der im Bereich von zwischen 10 und 40 Massen-%, bezogen auf die Gesamtmasse der Butadieneinheiten, liegt, und eine zwischen 10 000 und 500 000 Dalton liegende, durchschnittliche Molekularmasse $M_w$ aufweist, die durch GPC-Chromatographie mit einem Polystyrolstandard nach der Norm ASTM D3536 gemessen wird, und
- mindestens ein Vernetzungsmittel, das aus den Verbindungen der allgemeinen Formel HS-R-SH ausgewählt ist, wobei R eine gesättigte oder ungesättigte, lineare oder vernetzte Kohlenwasserstoffgruppe von 2 bis 40 Wasserstoffatomen darstellt, die gegebenenfalls eines oder mehrere Heteroatome umfasst,

wobei die vernetzte Bitumen/Polymerzusammensetzung eine maximale Ausdehnung nach der Norm NF EN 13587 von größer oder gleich 400%, eine maximale Ausdehnungsbelastung nach der Norm NF EN 13587 von größer oder gleich 0,4 MPa, eine konventionelle Energie von 400% nach der Norm NF EN 13587 von größer oder gleich 3 J/cm$^2$ und eine Gesamtenergie nach der Norm NF EN 13587 von größer oder gleich 1 J aufweist.

**14.** Bitumen/Polymerzusammensetzung nach Ansprüchen 11, 12 oder 13, umfassend zwischen 3 und 7 Massen-% eines Styrol- und Butadiencopolymers, bezogen auf die Masse der vernetzten Bitumen/Polymerzusammensetzung.

**15.** Bitumen/Polymerzusammensetzung nach einem der Ansprüche 11 bis 14, umfassend zwischen 3 und 6 Massen-% von Fischer-Tropsch Wachsen, bezogen auf die Masse der vernetzten Bitumen/Polymerzusammensetzung.

**16.** Verfahren zur Herstellung einer vernetzten Bitumen/Polymerzusammensetzung nach Ansprüchen 11 oder 12, oder nach einem der Ansprüche 14 bis 15, wobei zunächst, bei zwischen 120 °C und 220 °C, über eine Dauer von 1 Stunde bis zu 48 Stunden, mindestens ein Bitumen, mindestens ein Styrol- und Butadiencopolymer das einen Gehalt an Einheiten mit, von Butadien abgeleiteten Doppelbindungen 1-2 aufweist, der im Bereich von zwischen 10 und 40 Massen-%, bezogen auf die Gesamtmasse der Butadieneinheiten, liegt, und eine zwischen 10 000 und 500 000 Dalton liegende, durchschnittliche Molekularmasse $M_w$ aufweist, die durch GPC-Chromatographie mit einem Polystyrolstandard nach der Norm ASTM D3536 gemessen wird, gegebenenfalls mindestens ein Vernetzungsmittel miteinander in Kontakt gebracht werden, und, wobei, danach, das Gemisch bei zwischen 120 °C und 220 °C, über eine Dauer von 30 Minuten bis zu 48 Stunden, mit von 2 bis 6 Massen-% von Fischer-Tropsch Wachsen in Kontakt gebracht wird.

**17.** Verfahren zur Herstellung einer vernetzten Bitumen/Polymerzusammensetzung nach einem der Ansprüche 13 bis 15, wobei zunächst, bei zwischen 120 °C und 220 °C, über eine Dauer von 1 Stunde bis zu 48 Stunden, mindestens ein Bitumen, mindestens ein Styrol- und Butadiencopolymer das einen Gehalt an Einheiten mit, von Butadien abgeleiteten Doppelbindungen 1-2 aufweist, der im Bereich von zwischen 10 und 40 Massen-%, bezogen auf die Gesamtmasse der Butadieneinheiten, liegt, und eine zwischen 10 000 und 500 000 Dalton liegende, durchschnittliche Molekularmasse $M_w$ aufweist, die durch GPC-Chromatographie mit einem Polystyrolstandard nach der Norm ASTM D3536 gemessen wird, und mindestens ein Vernetzungsmittel, das aus den Verbindungen der allgemeinen Formel HS-R-SH ausgewählt ist, wobei R eine gesättigte oder ungesättigte, lineare oder vernetzte Kohlenwasserstoffgruppe von 2 bis 40 Wasserstoffatomen darstellt, die gegebenenfalls eines oder mehrere Heteroatome umfasst, miteinander in Kontakt gebracht werden, und, danach, das Gemisch bei zwischen 120 °C und 220 °C, über eine Dauer von 30 Minuten bis zu 48 Stunden, mit von 2 bis 6 Massen-% von Fischer-Tropsch Wachsen in Kontakt gebracht wird.

**18.** Bituminöses Mischgut, umfassend eine vernetzte Bitumen/Polymerzusammensetzung, nach einem der Ansprüche 11 bis 15, in Mischung mit Granulaten

**19.** Verfahren zur Herstellung einer vernetzten Bitumen/Polymerzusammensetzung nach Anspruch 18, wobei die Granulate und die vernetzte Bitumen/Polymerzusammensetzung, nach einem der Ansprüche 11 bis 15, bei zwischen 120 °C und 220 °C gemischt werden.

**Claims**

**1.** Use of 2 to 6% by weight of Fischer-Tropsch waxes, with respect to the weight of the cross-linked bitumen/polymer composition, comprising a cross-linked copolymer of styrene and butadiene, the cross-linked bitumen/polymer composition comprising from 2% to 8% by weight of a styrene and butadiene copolymer, based on the weight of the cross-linked bitumen/polymer composition in a cross-linked bitumen/polymer composition, to improve resistance against petroleum hydrocarbons selected from kerosenes and/or gas oils of said cross-linked bitumen/polymer composition, said styrene-butadiene copolymer has a content of 1,2-butadiene-derived double-bond units comprised between 10% and 40% by weight, relative to the total weight of butadiene units and has an average molecular weight Mw of between 10,000 and 500,000 Daltons, measured by GPC chromatography with a polystyrene standard according to the ASTM D3536 standard,
said cross-linked bitumen/polymer composition having a maximum elongation, according to standard NF EN 13587, greater than or equal to 400%, a maximum elongation stress, according to standard NF EN 13587, greater than or equal to 0.4 MPa, a conventional energy at 400% according to standard NF EN 13587, greater than or equal to 3 $J/cm^2$ and a total energy, according to standard NF EN 13587, greater than or equal to 1 J.

**2.** The use according to claim 1, in which the styrene-butadiene copolymer has a content of 1,2-butadiene-derived double-bond units comprised between 15% and 30% by weight, relative to the total weight of the butadiene units.

**3.** Use according to claim 1 or 2, wherein the copolymer of styrene and butadiene is associated with a crosslinking agent.

**4.** Use according to claim 3, in which the cross-linking agent comprises flowers of sulphur.

**5.** Use according to claim 3, wherein the crosslinking agent is selected from compounds of general formula HS-R-SH where R represents a saturated or unsaturated, linear or branched hydrocarbon group, of 2 to 40 carbon atoms, comprising optionally one or more heteroatoms.

**6.** Use according to any one of claims 1 to 5, wherein the cross-linked bitumen/polymer composition comprises from 3% to 6% by weight of styrene-butadiene copolymer, relative to the weight of the cross-linked bitumen/polymer composition.

**7.** Use according to any one of claims 3 to 5, wherein the cross-linked bitumen/polymer composition comprises from 0.05% to 5% by weight of crosslinking agent, based on the weight of the cross-linked bitumen/polymer composition.

**8.** Use according to any one of claims 1 to 7, wherein the amount of Fischer-Tropsch waxes in the cross-linked bitumen/polymer composition is between 3% and 6% by weight, relative to the weight of the cross-linked bitumen/polymer composition.

**9.** Use according to any one of claims 1 to 8, to improve resistance against petroleum hydrocarbons selected from kerosenes and/or gas oils of the cross-linked bitumen/polymer composition when it is used in road application as a surface layer.

**10.** Use according to any one of claims 1 to 9, to improve the resistance against petroleum hydrocarbons selected from kerosenes and/or gas oils of the cross-linked bitumen/polymer composition when it is mixed with aggregates in a bituminous mix.

**11.** A cross-linked bitumen/polymer composition comprising:

- at least one bitumen,
- from 2% to 6% by weight of Fischer-Tropsch waxes, relative to the weight of the cross-linked bitumen/polymer composition
- and from 2% to 8% by weight relative to the weight of the cross-linked bitumen/polymer composition of a styrene/butadiene copolymer which has a content of 1,2-butadiene-derived double-bond units comprised between 10% and 40% by weight, relative to the total weight of butadiene units, and an average molecular weight Mw of between 10,000 and 500,000 Daltons, measured by GPC chromatography with a polystyrene standard according to ASTM D3536,

said cross-linked bitumen/polymer composition having a maximum elongation, according to standard NF EN 13587, greater than or equal to 400%, a maximum elongation stress, according to standard NF EN 13587, greater than or equal to 0.4 MPa, conventional energy at 400% according to standard NF EN 13587 greater than or equal to 3 $J/cm^2$ and a total energy, according to standard NF EN 13587, greater than or equal to 1 J.

12. Bitumen/polymer composition according to claim 11, cross-linked without a crosslinking agent.

13. A cross-linked bitumen/polymer composition comprising:

- at least one bitumen,
- from 2% to 6% by weight of Fischer-Tropsch waxes, relative to the weight of the cross-linked bitumen/polymer composition,
- from 2% to 8% by weight relative to the weight of the cross-linked bitumen/polymer composition of a styrene/butadiene copolymer which has a content of 1,2-butadiene-derived double-bond units of between 10% and 40% by weight based on the total weight of butadiene units, and an average molecular weight Mw between 10,000 and 500,000 Daltons, measured by GPC chromatography with a polystyrene standard according to ASTM D3536,
- and at least one crosslinking agent selected from compounds of general formula HS-R-SH in which R represents a linear or branched, saturated or unsaturated hydrocarbon group of 2 to 40 carbon atoms, optionally comprising one or more heteroatoms,

said cross-linked bitumen/polymer composition having a maximum elongation, according to standard NF EN 13587, greater than or equal to 400%, a maximum elongation stress, according to standard NF EN 13587, greater than or equal to 0.4 MPa, a conventional energy at 400% according to standard NF EN 13587 greater than or equal to 3 $J/cm^2$ and a total energy, according to standard NF EN 13587, greater than or equal to 1 J.

14. Cross-linked bitumen/polymer composition according to claim 11, 12 or 13 comprising between 3% and 7% by weight of styrene-butadiene copolymer, relative to the weight of the cross-linked bitumen/polymer composition.

15. Cross-linked bitumen/polymer composition according to any one of claims 11 to 14 comprising between 3% and 6% by weight of Fischer-Tropsch waxes, relative to the weight of the cross-linked bitumen/polymer composition.

16. Process for the preparation of a cross-linked bitumen/polymer composition according to claim 11 or 12, or any one of claims 14 to 15 in which firstly the following are brought into contact at between 120°C and 220°C for a period from 1 hour to 48 hours: at least one bitumen, at least one copolymer of styrene and butadiene, which has a 1,2-butadiene-derived double-bond unit content of between 10% and 40% by weight, relative to the total weight of the butadiene units and an average molecular weight Mw of between 10,000 and 500,000 Daltons, measured by GPC chromatography with a polystyrene standard according to ASTM D3536, optionally at least one crosslinking agent, and then said mixture is brought into contact at between 120°C and 220°C, for a period of 30 minutes to 48 hours, with 2% to 6% by weight of Fischer-Tropsch waxes.

17. Process for the preparation of a cross-linked bitumen/polymer composition according to any one of claims 13 to 15, in which firstly the following are brought into contact at between 120°C and 220°C for a period from 1 hour to 48 hours: at least one bitumen, at least one copolymer of styrene and butadiene, which has a 1,2-butadiene derived double-bond unit content of between 10% and 40% by weight, based on the total weight of the butadiene units and an average molecular weight Mw of between 10,000 and 500,000 Daltons, measured by GPC chromatography with a polystyrene standard according to ASTM D3536, and at least one crosslinking agent selected from the compounds of general formula HS-R-SH in which R represents a linear or branched, saturated or unsaturated hydrocarbon group of 2 to 40 carbon atoms, optionally comprising one or more heteroatoms, and then contacting said mixture at between 120°C and 220°C for a period of 30 minutes to 48 hours, with 2% to 6% by weight of Fischer-Tropsch waxes.

18. Bituminous mix comprising a cross-linked bitumen/polymer composition according to any one of claims 11 to 15 mixed with aggregates.

**19.** Method for preparing a bituminous mix according to claim 18, in which the aggregates and the cross-linked bitumen/polymer composition according to any one of claims 11 to 15 are mixed between 120°C and 220°C.

## RÉFÉRENCES CITÉES DANS LA DESCRIPTION

**Documents brevets cités dans la description**

- EP 1311619 A
- WO 2009016281 A
- WO 9911737 A
- EP 1951818 A